# EUROPEAN PATENT APPLICATION

(11) **EP 4 831 389 A1**
(43) Date of publication of application: **28.10.2026**
(21) Application number: 25172449.8
(22) Date of filing: 24.04.2025
(51) Int. Cl.: D21F 1/66, B01D 61/02

(54) **A PLANT FOR PRODUCING PAPER WITH AN EFFICIENT PROCESS WATER PURIFICATION CIRCUIT**

(71) Applicant: MERI Environmental Solutions GmbH, 81243 München (DE)
(72) Inventor: PITA COELHO, Rosa Elena, 84072 Au i.d. Hallertau (DE); RONGA, Manlio, 80999 München (DE); TROUBOUNIS, Georgios, 81735 München (DE)
(74) Representative: Henkel & Partner mbB

(57) **Abstract**

The present invention relates to a plant for producing paper from a fiber containing raw material, wherein the plant comprises a stock preparation device for preparing a fiber suspension and a paper machine for producing paper from the fiber suspension being connected with the stock preparation device, wherein at least one of the stock preparation device and the paper machine comprises a process water circuit, which may be connected via a line with a wastewater purification and removal device from which a process water recycle line leads directly or indirectly back into one of the stock preparation device and the paper machine, wherein at least one process water circuit and/or wastewater purification and removal device comprises i) a microfiltration device and/or an ultrafiltration device as well as ii) a nanofiltration device and/or a reverse osmosis device.

## Description

The present invention relates to a plant for producing paper from a fiber containing raw material as well as to a method for the purification of process water being circulated therein.

During the production of paper in a paper production plant, water is used as a transport medium for the fibers that are required to produce the paper. On account of the high volumes of water required in a paper production plant, namely 3 to 10 liter water per kg produced paper depending on the used fiber raw material, all or at least a major amount of the required water is reused by circulating the water in a process water circuit. Usually, a paper production plant comprises a stock preparation device for preparing a fiber suspension and a paper machine for producing paper from the fiber suspension, wherein the paper machine is connected with the stock preparation device, and wherein the stock preparation device may comprise one or more stages. Typically, the paper machine as well as each stage of the stock preparation device each comprises a separate process water circuit, wherein water is withdrawn via a line from one or more different locations of the respective stage of the stock preparation device or paper machine, such as from one or more different locations of the first stage of the stock preparation device, and is recirculated via a process water line back into another location of the device, which is typically upstream from the one or more locations, from which the process water is withdrawn from the respective stage of the stock preparation device or paper machine. The recirculated water is denoted herein as process water, whereas water being withdrawn from the plant is denoted herein as wastewater, water being introduced into the plant from outside is denoted herein as fresh water and water being led through the paper production machine without being recirculated in a circuit is denoted herein as water. The reuse of the water or of at least a major portion thereof by process water (re)circulation allows to drastically reduce the amount of required fresh water for the paper production meanwhile avoiding or at least drastically reducing the amount of wastewater. In some cases, all of the water is (re)circulated in the paper production plant as process water so that only a small amount of fresh water is required in order to compensate the process water being lost in the paper production process due to evaporation and due to the small amount of water being present as rest humidity in the sludges and production-rejects that are disposed.

In order to prevent an enrichment of pollutants and of other impurities in the process water, i.e. in order to avoid that the chemical oxygen demand (COD) and/or the biochemical oxygen demand (BOD) and/or inorganic substances increase above an acceptable numeric value, the process water is usually purified during the recirculation in the process water circuit. Such a purification of process water is particularly important in the case of the production of paper from wastepaper. During the production of paper from wastepaper, the wastepaper paper is first mixed with water and comminuted while stirring and mixing in a circular or drum pulper of a wastepaper stock preparation device so as to facilitate the breakdown of the fibers to a defibered slurry comprising individual fibers from the wastepaper in water. Subsequently, the fibers are purified in order to remove non-fibrous impurities from the fibrous pulp, before the fibers are optionally discolored and are finally processed in the paper machine to paper. Optionally, during the process a small amount of primary fibers may be added to the fibers being recovered from the wastepaper. A large number of mechanical, chemical, and biological methods and corresponding reactors are known for purifying process water. Examples for chemical-physical purification methods are filtration and dissolved air flotation, whereas an example for a chemical purification method is the addition of a flocculant in order to effect a precipitation of impurities within the process water. In turn, biological water purification processes comprise the step of bringing the process water to be purified into contact with aerobic or anaerobic microorganisms, which convert the organic impurities being contained in the process water mainly into carbon dioxide and water in the case of aerobic microorganisms and mainly into carbon dioxide and methane in the case of anaerobic microorganisms. Biological process water purification methods have recently been increasingly carried out with anaerobic microorganisms, because in anaerobic process water purification oxygen does not have to be introduced into the bioreactor at high energy input and because high-energy biogas is generated during the purification with anaerobic microorganisms, which can then be used to generate energy. It is also known that the process water is fed, prior to being fed into an anaerobic reactor, into a pre-acidification reactor in which hydrolysis and acidification take place by hydrolyzing and acidifying bacteria. While these bacteria convert during the hydrolysis polymers, such as polysaccharides, polypeptides and fats, into their monomers, such as sugars, amino acids and fatty acids, these monomers are converted during the acidification into organic acids, alcohols, aldehydes, hydrogen, and carbon dioxide. Therefore, a first pre-purification of the process water already takes place in the pre-acidification reactor.

Despite of the aforementioned purification of the process water, the process water is subject to continuous (residual) contamination, in particular by residual biological, organic and inorganic substances, the amount of which may be drastically reduced, but not completely eliminated by the aforementioned purification methods. For this reason, in practice certain amounts of fresh water need to be continuously added to the process water, in order to reduce the concentration of these impurities, and a respective amount of the process water need to be continuously withdrawn as wastewater, which has to be further purified, before it can be discarded. However, the addition of fresh water to the process water leads to a continuous addition of several ions into the process water. Furthermore, one or more pH adjustment agents are continuously added to the process water, in order to maintain an optimal pH value within the process water. However, the addition of pH adjustment agents, such as typically of inorganic acids containing chloride and/or sulfate ions, leads to the continuous addition of chloride and/or sulfate ions into the process water. Moreover, fatty acids, lignin containing compounds, rosin acids and other organic substances are continuously added to the process water, wherein these fatty acids and other organic substances derive from the fiber raw material used for the paper production, such as mechanical wood pulp or wastepaper. For instance, wastepaper contains fatty acids being contained in the inks with which the wastewater was printed. In addition, wastepaper contains organic substances being contained in adhesives as well as starch being present on the wastepaper surface, wherein the starch has been applied to the wastepaper during the paper production in order to improve the strength and smoothness of the paper. Also, organic substances deriving from additives used during the paper production, such as defoamers or dispersants, are present in wastepaper. Furthermore, the process water contains microorganisms as well as decomposition products from microorganisms used for anaerobic purification of the process water, for hydrolysis and for acidification. On account of the aforementioned reasons, not only the salt and ion concentrations, but also the COD as well as the BOD of the process water during the paper production are comparably high. This does not only lead to a higher fresh water demand, a higher amount of chemicals and a higher amount of biocide than desired, but also to a high risk of the formation of undesired depositions of inorganic salts and/or organic compounds as well as to undesired biofilm depositions for example in the pipes and paper machine of the paper production plant.

In view of the above, the object underlying the present invention is to provide a method for the purification of process water being circulated in at least one process water circuit of a paper production plant as well as a respective plant for producing paper, wherein the process water is more efficiently purified in the method or plant for producing paper, respectively, in particular in terms of reducing the COD as well as the concentration of ions than in the known methods and plants for producing paper, thereby allowing to minimize the addition of fresh water to the amount or close to the amount of fresh water being required in order to compensate the process water being lost in the paper production process due to evaporation and due to the small amount of water being present as rest humidity in the sludges and production-rejects that are disposed, and to significantly reduce the addition of chemicals and of biocide, wherein nevertheless the undesired depositions of inorganic salts and/or organic compounds and/or biofilms are reliably avoided.

In accordance with the present invention, this object is satisfied by providing a plant for producing paper from a fiber containing raw material, wherein the plant comprises a stock preparation device for preparing a fiber suspension and a paper machine for producing paper from the fiber suspension being connected with the stock preparation device, wherein at least one of the stock preparation device and the paper machine comprises a process water circuit, which may be connected via a line with a wastewater purification and removal device from which a process water recycle line leads directly or indirectly back into one of the stock preparation device and the paper machine, wherein at least one process water circuit and/or wastewater purification and removal device comprises i) a microfiltration device and/or an ultrafiltration device as well as ii) a nanofiltration device and/or a reverse osmosis device.

This solution bases on the surprising finding that by subjecting at least a portion the process water during its purification to a specific combination of purification steps, namely to i) a microfiltration step in a microfiltration device and/or an ultrafiltration step in an ultrafiltration device as well as ii) to a nanofiltration step in a nanofiltration device and/or a reverse osmosis step in a reverse osmosis device, particulate impurities, such as inorganic salts, organic compounds as well as microorganisms, as well as ions are efficiently removed from the process water so that the BOD, the COD, the inorganic salt concentration, the ion concentration as well as the concentration of slime having been produced by microorganisms and being prone to form biofilm depositions are significantly reduced or their presence in the process water can effective be controlled. On account thereof, during the paper production in the plant for producing paper or paper production plant, respectively, in accordance with the present invention the fresh water addition may be significantly reduced, namely to the amount or at least close to the amount of fresh water being required in order to compensate the process water being lost in the paper production process due to evaporation and due to the small amount of water being present as rest humidity in the sludges and production-rejects that are disposed. Furthermore, on account thereof during the paper production in the paper production plant in accordance with the present invention the addition of chemicals, such as of retention agents and defoamers, and of biocide may be drastically reduced, which in turn reduces the entry of ions and inorganic salts into the process water as well as the generation of biofilm forming slime by microorganisms in the process water. For instance, the reduction of the concentration of microorganisms also reduces bad odor of the process water, whereas the reduction of the concentration of sulfate based compounds reduces the potential of biological corrosion, since depositions of sulfate and stagnant zones are growth zones for microorganisms and cause undesired anaerobic fermentation processes. Likewise thereto, the reduction of the concentration of chloride based compounds and of calcium and magnesium ions reduces the potential of inorganic corrosion. The reduction of ions further reduces the conductivity of the process water. Also, parallel to the reduction of the COD, the content of per- and polyfluoroalkyl substances (PFAS) in the process water is reduced. All in all, the present invention provides a plant for producing paper from a fiber containing raw material, during the operation of which process water being circulated in at least one process water circuit of the plant is more efficiently purified, in particular in terms of reducing the COD as well as the concentration of inorganic salts and ions than in the known methods and plants for producing paper, thereby allowing to minimize the addition of fresh water as well as to significantly reduce the addition of chemicals and of biocide, wherein nevertheless the undesired depositions of inorganic salts and/or organic compounds and/or biofilms, such as in pipes or on doctor blades, reels and/or dryer felts of the paper machine, are reliably avoided.

As set out above, process water means in accordance with the present invention water being circulated in at least one process water circuit of a paper production plant to thereby distinguish it from wastewater, fresh water or water being consumed during the production of paper, for example by evaporation or by inclusion into the produced paper.

Furthermore, a process water circuit of a paper production plant means in accordance with the present invention a piping system of one or more water lines enabling to withdraw process water form one or more locations of the paper production plant and to recirculate it to the same or one or more other locations of the paper production plant, wherein the piping system comprises or is connected, respectively, at least with i) a microfiltration device and/or an ultrafiltration device as well as ii) a nanofiltration device and/or a reverse osmosis device, and may comprise or may be connected, respectively, with one or more further purification devices, such as a dissolved air flotation device, an anaerobic reactor or the like.

In accordance with the present invention, at least one process water circuit and/or wastewater purification and removal device comprises i) a microfiltration device and/or an ultrafiltration device as well as ii) a nanofiltration device and/or a reverse osmosis device. Microfiltration, ultrafiltration, nanofiltration and reverse osmosis are pressure-driven membrane separation processes, which remove solid particles and microorganisms from liquids by means of a fine-pored filter, which allows water to pass through the filter pores to thereby form the permeate, whereas solid particles are blocked to pass through the filter pores to thereby form the retentate. Furthermore, nanofiltration allows to remove a part of quasi dissolved solids (colloidal material) and ions and reverse osmosis allows to nearly completely remove quasi dissolved solids (colloidal material) and ions. More specifically, in accordance with the present invention a microfiltration device means a device comprising one or more filters, each of which having a pore size range of more than 0.1 to 10 µm and preferably of more than 0.1 to 5 µm, wherein pore size range is defined in accordance with the present invention so that at least 50%, preferably at least 70%, more preferably at least 90%, yet more preferably at least 95%, even more preferably at least 98%, still more preferably at least 99% and most preferably all of the filter pores have a pore size lying within the pore size range. Typically, a microfiltration device is operated with a pressure of 100 to 400 kPa and preferably of 150 to 300 kPa. Furthermore, an ultrafiltration device means in accordance with the present invention a device comprising one or more filters, each of which having a pore size range of more than 10 to 100 nm, wherein ultrafiltration is preferably operated with a pressure of 100 to 600 kPa and preferably of 200 to 300 kPa. In turn, a nanofiltration device means in accordance with the present invention a device comprising one or more filters, each of which having a pore size range of more than 1 to 10 nm, wherein nanofiltration is preferably operated with a pressure of 300 to 800 kPa and preferably of 400 to 600 kPa. In addition, reverse osmosis means in accordance with the present invention a device comprising one or more semipermeable membranes, each of which having a pore size range of 1 nm or less and preferably of 0.1 to 1 nm, wherein reverse osmosis is preferably operated with a pressure of 900 to 25,000 kPa. The advantage of using a nanofiltration device and/or a reverse osmosis device is that each thereof is able to not only remove solid particles and microorganisms from the process water, but to a certain degree also dissolved solids and ions, such as calcium, sodium, sulfate and chloride ions. It has been found within the present invention that one stage of nanofiltration removes from the process water 25 to 50% of calcium ions, 40 to 55% of sodium ions, 60 to 90% of sulfate ions and 30 to 40% of chloride ions, wherein the removal rate can be increased by using two or more nanofiltration stages. Moreover, it has been found within the present invention that one stage of reverse osmosis removes from the process water 98 to 99% of calcium ions, about 95% of sodium ions, about 96 to 97% of sulfate ions and about 95% of chloride ions, wherein the removal rate can be increased by using two or more reverse osmosis stages.

Preferably, the microfiltration device and/or ultrafiltration device i) and the nanofiltration device and/or reverse osmosis device ii) are connected with each other so that the permeate side of the most downstream of the nanofiltration device and/or reverse osmosis device ii) is connected with the most upstream of the microfiltration device and/or ultrafiltration device i) and preferably so that the permeate side of the most downstream of the microfiltration device and/or ultrafiltration device i) is connected with the most upstream of the nanofiltration device and/or reverse osmosis device ii).

In accordance with a further preferred embodiment of the present invention, the microfiltration device and/or ultrafiltration device i) is arranged in the process water circuit upstream of the nanofiltration device and/or reverse osmosis device ii). In other words, the permeate side of the most downstream of the microfiltration device and/or ultrafiltration device i) is connected with the most upstream of the nanofiltration device and/or reverse osmosis device ii). In this embodiment, the microfiltration device and/or ultrafiltration device i) removes the larger solid particles as well as microorganisms and thereby allows the subsequent nanofiltration device and/or reverse osmosis device ii) to remove smaller solid particles and ions with reduced tendency that the nanofilter(s) and/or semipermeable reverse osmosis membrane(s) get clogged by the already essentially removed larger solid particles.

Good results are in particular obtained, when the at least one process water circuit and/or wastewater purification and removal device comprises an ultrafiltration device i) as well as a nanofiltration device or a reverse osmosis device ii), wherein the nanofiltration device or reverse osmosis device ii) preferably comprises one, two or more stages.

In a further development of the idea of the present invention, it is suggested that a fine filter device is arranged upstream of the most upstream of the microfiltration device and/or ultrafiltration device i) and of the nanofiltration device and/or reverse osmosis device ii). Moreover, it is preferred that a fine filter device and/or a microfilter device having a pore size of 1 to 10 µm is arranged between the microfiltration device and/or ultrafiltration device i) and the nanofiltration device and/or reverse osmosis device ii). Both aforementioned variants may be combined, i.e. a) a fine filter device is arranged upstream of the most upstream of the microfiltration device and/or ultrafiltration device i) and of the nanofiltration device and/or reverse osmosis device ii) and b) a fine filter device and/or a microfilter device having a pore size of 1 to 10 µm is arranged between the microfiltration device and/or ultrafiltration device i) and the nanofiltration device and/or reverse osmosis device ii). The fine filter may comprise filter(s) being e.g. made from polypropylene, polyester or stainless steel. A fine filter is defined in accordance with the present invention as a filter device comprising one or more filters, each of which having a pore size range of more than 10 µm, such as more than 10 to 50 µm or more than 10 to 150 µm, wherein fine filtration is preferably operated with a pressure of 30 to 70 kPa and preferably of 40 to 50 kPa. The fine filter device may comprise one or more filter stages.

Particularly suitable combinations of filter devices of the at least one process water circuit and/or wastewater purification and removal device are, seen from the upstream end to the downstream end of the at least one process water circuit and/or wastewater purification and removal device:
a) a microfiltration device and a nanofiltration device comprising one, two or more stages,
b) a microfiltration device and a reverse osmosis device comprising one, two or more stages,
c) an ultrafiltration device and a nanofiltration device comprising one, two or more stages,
d) an ultrafiltration device and a reverse osmosis device comprising one, two or more stages,
e) i) a microfiltration device, ii) a fine filter device and/or microfilter device having a pore size of 1 to 10 µm and iii) a nanofiltration device comprising one, two or more stages,
f) i) a microfiltration device, ii) a fine filter device and/or microfilter device having a pore size of 1 to 10 µm and iii) a reverse osmosis device comprising one, two or more stages,
g) i) an ultrafiltration device, ii) a fine filter device and/or microfilter device having a pore size of 1 to 10 µm and iii) a nanofiltration device comprising one, two or more stages,
h) i) an ultrafiltration device, ii) a fine filter device and/or microfilter device having a pore size of 1 to 10 µm and iii) a reverse osmosis device comprising one, two or more stages.

Each of the aforementioned filter combinations may comprise at the upstream end an optional fine filter device.

In each of arrangement, the permeate side of an upstream filtration device is connected with the inlet of a downstream filtration device, whereas preferably the retentate side of the each of the filtration devices is connected with a retentate withdrawal line, which may lead to a retentate treatment device. The retentate side of a reverse osmosis device is often also denoted as concentrate side. Each of the filtration devices may comprise two or more stages, such as two stages. In this embodiment, the retentate side of the first stage is connected via a connection line with the inlet side of the second stage, wherein the permeate side of the second stage is either connected via a return line with a location of the process water recirculation line being upstream of the first stage or with a line through which the permeate of the first stage is withdrawn.

In accordance with a first particular preferred embodiment of the present invention, the paper machine of the paper production plant comprises a process water circuit, which comprises the i) microfiltration device and/or ultrafiltration device as well as the ii) nanofiltration device and/or reverse osmosis device. More preferably, the paper machine of the paper production plant comprises a process water circuit, which comprises, in this order, a i) microfiltration device, ii) a fine filter device and/or microfilter device having a pore size of 1 to 10 µm and iii) a nanofiltration device comprising two or more stages or a i) microfiltration device, ii) a fine filter device and/or microfilter device having a pore size of 1 to 10 µm and iii) a reverse osmosis device comprising two or more stages, wherein each of these arrangements may comprise at the upstream end an optional fine filter device.

Preferably, the paper machine comprises, seen from the upstream to the downstream end, a screening section, a forming section, a press section, a drying section and a frequently with a calender section, wherein the screening section is connected with a reject treatment device and the forming section is connected with a fiber recovery device, wherein the process water circuit, which comprises the i) microfiltration device and/or ultrafiltration device as well as the ii) nanofiltration device and/or reverse osmosis device, is connected at one end with the reject treatment device and/or with the fiber recovery device and with its opposite end with the feed or upstream end of the screening device or preferably the spraying water system of the paper machine.

In addition to the microfiltration device and/or ultrafiltration device i) as well as the nanofiltration device and/or reverse osmosis device ii), the process water circuit of the paper machine further comprises at least one of a thickening device, a solids removal device, an anaerobic reactor, a stripping device (such as a flash oxidation device) for separating and removing gas from the process water and a lime precipitation and removal device. Preferably, the process water circuit of the paper machine comprises, in this order, an anaerobic reactor, a stripping device (such as a flash oxidation device) as well as a lime precipitation and removal device and more preferably also a thickening device and/or a solids removal device upstream of the anaerobic reactor, of the stripping device and of the lime precipitation and removal device. The aforementioned devices may be arranged in the process water circuit of the paper machine of the plant in series to each other or in parallel to each other. If the devices are arranged in series to each other, the process water circuit may be a process water recirculation line, which is connected with the aforementioned devices one after another, wherein preferably the i) microfiltration device and/or ultrafiltration device as well as the ii) nanofiltration device and/or reverse osmosis device are arranged downstream of all of the at least one of the thickening device, the solids removal device, the anaerobic reactor, the stripping device and the lime precipitation and removal device. If the devices are arranged in parallel to each other, the process water circuit may comprise a process water recirculation line, which splits into two partial process water lines, wherein one of the two partial process water lines either is connected directly with the process water circuit or comprises one, two, three four or five of the thickening device, the solids removal device, the anaerobic reactor, the stripping device as well as the lime precipitation and removal device, whereas the other partial process water lines comprises the i) microfiltration device and/or ultrafiltration device as well as the ii) nanofiltration device and/or reverse osmosis device, wherein both partial process water lines recombine to the process water recirculation line downstream of the devices.

While the solids removal device may comprises one or more disc filters, the stripping device (such as a flash oxidation device) may be operated so that the process water flows co-currently or counter-currently with air through the stripping device. For instance, the process water flows co-currently with air from the bottom to the top of the stripping device, wherein the separated gas is withdrawn from the top of the stripping device. Alternatively, the process water flows from the top to the bottom of the stripping device, whereas air streams co-currently from the bottom to the top of the stripping device through the process water, wherein the separated gas is withdrawn from the top of the stripping device. In turn, the lime precipitation and removal device preferably comprises a flotation reactor and more preferably a dissolved air flotation reactor. Dissolved air flotation means a flotation method, in which small air bubbles rise during the flotation upwardly through water to be purified, wherein the air bubbles have been generated by dissolving air under pressure in water, before the so obtained air-water-mixture is depressurized so as to release small air bubbles in the water. Dissolved air flotation may be also denoted as pressure relief flotation.

In accordance with a further preferred variant of the present invention, the process water circuit of the paper machine of the plant further comprises a carbon dioxide injection means for injecting carbon dioxide gas as pH adjustment agent into the process water flowing through the process water circuit. A particular advantage of using carbon dioxide as pH adjustment agent is that thereby no ions, such as sulfate, chloride ions or others, are introduced into the process water as it is the case when using pH adjustment agents as used in the prior art methods, such as mineral acids, such as sulfuric acid or hydrochloric acid.

In a further development of the idea of the present invention it is proposed that the process water circuit of the paper machine of the plant further comprises an ozone injection means for injection of ozone gas into the process water flowing through the process water circuit. Ozone gas means ozone or an ozone containing gas mixture, such as gas mixture containing at least 20 vol.-% ozone, more preferably at least 40 vol.-% ozone, even more preferably at least 80 vol.-% ozone, still more preferably at least 95 vol.-% ozone and most preferably at least 99 vol.-% ozone. The remainder to 100 vol.-% may be any other gas, such as oxygen or preferably an inert gas, such as carbon dioxide or nitrogen. Most preferably, the ozone gas is ozone without addition of any other gas. Ozone is an effective disinfectant and a powerful oxidizing agent and does not only oxidize and thereby convert organic impurities, but also has the ability to inactivate microorganisms, such as bacteria, viruses and fungi. On account thereof, the addition of ozone during the process water treatment reduces the content of microorganisms in the process water and converts at least a portion of the organic impurities. As a consequence thereof, the addition of ozone assists in the reduction of the COD of the process water and reduces the microbial load of the process water thereby avoiding or at least significantly reducing the risk of the formation of undesired biofilm depositions for example in the pipes and paper machine of the paper production plant. Preferably, the ozone injection means is arranged in the process water circuit upstream of the microfiltration device and/or ultrafiltration device i) as well as of the nanofiltration device and/or reverse osmosis device ii).

Moreover, it is preferred that - instead of the ozone injection means or in addition to the ozone injection means - the process water circuit of the paper machine of the plant further comprises a dissolved ozone flotation device and a gas-liquid dissolving tank, wherein the dissolved ozone flotation device comprises a flotation tank with a process water inlet line, an inlet line for ozone, a process water outlet line, a solid outlet line, and wherein the gas-liquid dissolving tank comprises an inlet line for compressed ozone, an inlet line for water and an outlet line for a pressurized ozone gas containing water mixture, wherein the outlet line for a pressurized ozone gas containing water mixture is connected with the inlet line for ozone of the flotation tank and is comprised with a pressure relief valve allowing to depressurize the pressurized ozone gas containing water mixture. Such a dissolved ozone flotation device allows to particularly efficiently inject the ozone into the process water and to efficiently use it not only for the reduction of the COD and of the microbial load of the process water, but also to remove solids being dispersed in the process water by flotation. The dissolved ozone flotation device may be comprised in the process water circuit in addition to the aforementioned preferred dissolved air flotation device or in replacement thereof.

In accordance with a second particular preferred embodiment of the present invention, the stock preparation device of the paper production plant comprises a process water circuit, which comprises the i) microfiltration device and/or ultrafiltration device as well as the ii) nanofiltration device and/or reverse osmosis device. More preferably, the stock preparation device of the paper production plant comprises, in this order, a process water circuit, which comprises a i) microfiltration device, ii) a fine filter device and/or microfilter device having a pore size of 1 to 10 µm and iii) a reverse osmosis device comprising one or more stages, wherein optionally at the upstream end a fine filter device may be arranged.

In accordance with one variant of this embodiment, the stock preparation device comprises one stage, which comprises, seen from the upstream to the downstream end, a pulper, a screening device, a cleaning device and a dewatering device, wherein the pulper, the screening device and the cleaning device are connected with a reject treatment device, wherein the process water circuit, which comprises the i) microfiltration device and/or ultrafiltration device as well as the ii) nanofiltration device and/or reverse osmosis device, is connected at one end with the reject treatment device or the dewatering device, with the screening device, the cleaning device as well as with the dewatering device and with its opposite end with the pulper or preferably the spraying water system, dilution water system or sealing water system of the stock preparation device.

In accordance with another variant of this embodiment, the stock preparation device comprises two or more, preferably two to three and more preferably two stages, wherein each stage comprises a separate process water circuit, wherein the most upstream stage of the stock preparation device comprises, seen from the upstream to the downstream end, a pulper, a screening device, a cleaning device and a dewatering device, wherein the pulper, the screening device and the cleaning device are connected with a reject treatment device, wherein the process water circuit, which comprises the i) microfiltration device and/or ultrafiltration device as well as the ii) nanofiltration device and/or reverse osmosis device, is connected at one end with the reject treatment device, with the screening device, the cleaning device as well as with the dewatering device and with its opposite end with the pulper or preferably the spraying water system, dilution water system or sealing water system of the stage of the stock preparation device, wherein each other stage of the stock preparation device comprises, seen from the upstream to the downstream end, a screening device, a cleaning device, an oxidation/reduction device and a dewatering device, wherein the screening device, the cleaning device and the oxidation/reduction device are connected with a reject treatment device, wherein the process water circuit, which comprises the i) microfiltration device and/or ultrafiltration device as well as the ii) nanofiltration device and/or reverse osmosis device, is connected at one end with the reject treatment device, with the screening device, the cleaning device as well as with the dewatering device and with its opposite end with the screening device or preferably the spraying water system, dilution water system or sealing water system of the stock preparation device.

It is preferred that, if the stock preparation device comprises one process water circuit, the process water circuit or, if the stock preparation device comprises two or more process water circuits at least one and preferably each of the two or more process water circuits comprise a process water recirculation line, which splits upstream of the nanofiltration device and/or reverse osmosis device ii), but downstream of the microfiltration device and/or ultrafiltration device i) into two partial process water lines, wherein a first of the partial process water lines is connected with the nanofiltration device and/or reverse osmosis device ii), whereas a second of the partial process water lines bypasses the nanofiltration device and/or reverse osmosis device ii), wherein both partial process water lines separately lead back into the stock preparation device and preferably the pulper or more preferably spraying water system, dilution water system or sealing water system of the stock preparation device or both partial process water lines recombine, for instance to a certain relation, such as 0 to 10% or 1 to 20% or more, before the combined line leads back into the stock preparation device and preferably the pulper or more preferably spraying water system, dilution water system or sealing water system of the stock preparation device.

In accordance with a further development of the idea of the present invention, it is suggested that each of the process water circuits further comprises at least one of a thickening device, a solids removal device, an anaerobic reactor, a stripping device (such as a flash oxidation device) for separating and removing gas from the process water and a lime precipitation and removal device. Preferably, the i) microfiltration device and/or ultrafiltration device as well as the nanofiltration device and/or reverse osmosis device ii) are arranged downstream of all of the at least one of the thickening device, the solids removal device, the anaerobic reactor, the stripping device and the lime precipitation and removal device. In the above-mentioned embodiment, in which the process water circuit comprise a process water recirculation line, which splits upstream of the nanofiltration device and/or reverse osmosis device ii) into two partial process water lines, all of the at least one of the thickening device, the solids removal device, the anaerobic reactor, the stripping device and the lime precipitation and removal device are preferably arranged in the process water circuit upstream of the location, where the process water recirculation line splits into the two partial process water lines.

Likewise to the embodiment of the process water circuit being connected with the paper machine, it is also preferred in this embodiment, in which the stock preparation device of the paper production plant comprises a process water circuit, that the optional solids removal device comprises one or more disc filters and/or that the lime precipitation and removal device comprises a flotation reactor and more preferably a dissolved air flotation reactor.

Furthermore likewise to the embodiment of the process water circuit being connected with the paper machine, it is also preferred in this embodiment, in which the stock preparation device of the paper production plant comprises a process water circuit, that the process water circuit of each stage of the stock preparation device of the paper production plant further comprises an ozone injection means for injection ozone gas into the process water flowing through the process water circuit and/or, in combination, a dissolved ozone flotation device and a gas-liquid dissolving tank, which are embodied as set out with regard to the embodiment of the process water circuit being connected with the paper machine.

Moreover, it is preferred that - instead of the ozone injection means or in addition to the ozone injection means - the process water circuit of each stage of the stock preparation device of the plant further comprises a dissolved ozone flotation device and a gas-liquid dissolving tank, both being embodied as set out with regard to the embodiment of the process water circuit being connected with the paper machine.

In accordance with a further preferred variant of the present invention, the process water circuit of each stage of the stock preparation device of the plant further comprises a carbon dioxide injection means for injecting carbon dioxide gas as pH adjustment agent into the process water flowing through the process water circuit. As set out above, a particular advantage of using carbon dioxide as pH adjustment agent is that thereby no ions, such as sulfate, chloride ions or others, are introduced into the process water as it is the case when using pH adjustment agents as used in the prior art methods, such as mineral acids, such as sulfuric acid or hydrochloric acid.

In accordance with a third particular preferred embodiment of the present invention, at least one of the process water circuits being connected with the stock preparation device is connected via a line with a wastewater purification and removal device, wherein the wastewater purification and removal device comprises a i) microfiltration device and/or ultrafiltration device as well as a ii) nanofiltration device and/or reverse osmosis device, and wherein from the wastewater purification and removal device a process water recycle line leads directly or indirectly back into one of the stock preparation device and the paper machine and preferably into the paper machine. Preferably, the microfiltration device and/or ultrafiltration device i) and the nanofiltration device and/or reverse osmosis device ii) are connected with each other so that the permeate side of the most downstream of the nanofiltration device and/or reverse osmosis device ii) is connected with the most upstream of the microfiltration device and/or ultrafiltration device i) and preferably so that the permeate side of the most downstream of the microfiltration device and/or ultrafiltration device i) is connected with the most upstream of the nanofiltration device and/or reverse osmosis device ii). More preferably, the wastewater purification and removal device comprises, in this order, an i) ultrafiltration device, ii) a fine filter device and/or microfilter device having a pore size of 1 to 10 µm and iii) a nanofiltration device comprising one stage or an i) ultrafiltration device, ii) a fine filter device and/or microfilter device having a pore size of 1 to 10 µm and iii) a reverse osmosis device comprising one, two or more stages, wherein each of these arrangements may comprise at the upstream end an optional fine filter device.

Good results are in particular achieved, when the wastewater purification and removal device comprises upstream of the microfiltration device and/or ultrafiltration device i) as well as of the nanofiltration device and/or reverse osmosis device ii) an aerobic reactor and one, two or more clarifiers optionally followed by a dissolved air flotation device and/or a sandfiltration device, wherein each of the aerobic reactor, the one, two or more clarifiers and the optional dissolved air flotation device and/or sandfiltration device is connected with a wastewater removal line.

In accordance with a further preferred variant of the present invention, the wastewater purification and removal device further comprises a carbon dioxide injection means for injecting carbon dioxide gas as pH adjustment agent into the process water flowing through the process water circuit. As set out above, a particular advantage of using carbon dioxide as pH adjustment agent is that thereby no ions, such as sulfate, chloride ions or others, are introduced into the process water as it is the case when using pH adjustment agents as used in the prior art methods, such as mineral acids, such as sulfuric acid or hydrochloric acid.

Furthermore, it is also preferred in this embodiment that the wastewater purification and removal device further comprises an ozone injection means for injection ozone gas into the process water flowing through the wastewater purification and removal device and/or, in combination, a dissolved ozone flotation device and a gas-liquid dissolving tank, which are embodied as set out with regard to the embodiment of the process water circuit being connected with the paper machine.

In case of one-stage filtration devices, preferably the retentate side of the each of the microfiltration device and/or ultrafiltration device i) and of the nanofiltration device and/or reverse osmosis device ii) is connected with a retentate withdrawal line, which may lead to a retentate treatment device. In the case that at least one of the filtration devices comprises two or more stages, in order to reduce the volume of retentate flow being withdrawn from the plant, preferably the retentate side of an upstream stage of the filtration device is connected with the feed side of the next downstream stage of the same filtration device, wherein the retentate side of the most downstream of the stages of the filtration device is connected with a retentate withdrawal line, which may lead to a retentate treatment device. In turn, each permeate side of each of the downstream stages of the filtration device is connected with the feed side of the first stage of this filtration device or to the permeate side of a more upstream stage of this filtration device. Thus, in case of a two-stage filtration device, the retentate side of the first stage is connected with the inlet of the second stage and the retentate side of the second stage of the filtration device is connected with a retentate withdrawal line, which may lead to a retentate treatment device. In turn, the permeate side of the second stage of the filtration device is connected with the feed side of the first stage of this filtration device or to the permeate side of the first stage of this filtration device. The retentate side of a reverse osmosis device is often also denoted as concentrate side.

In addition, it is preferred that the microfiltration device and/or ultrafiltration device i) is arranged upstream of the nanofiltration device and/or reverse osmosis device ii), wherein the permeate side of the most downstream of the microfiltration device and/or ultrafiltration device i) is connected with the most upstream of the nanofiltration device and/or reverse osmosis device ii), wherein the permeate side of the nanofiltration device and/or reverse osmosis device ii) is connected with the process water recycle line, which leads directly or indirectly to the paper machine, preferably to the feed or upstream end of the screening device of the paper machine and more preferably the spraying water system of the paper machine. It is preferred that the process water recycle line leads directly to the paper machine and more preferably leads directly to the screening device of the paper machine.

In a further development of the idea of the present invention, it is proposed that in the aforementioned embodiment the permeate side of the microfiltration device and/or ultrafiltration device i) is also connected with a return line, which is directly or indirectly connected with the process water recycle line. Preferably, the return line is directly connected with the process water recycle line or indirectly, wherein the return line leads into a tank, wherein from the tank a connection line leads into the process water recycle line.

In accordance with a further embodiment of the present invention, the process water recycle line is connected with one or more fresh water supply lines upstream of the connection with the paper machine.

In order to re-use and/or to further treat at least a portion of the retentate obtained in the microfiltration device and/or ultrafiltration device i) and/or in the nanofiltration device and/or reverse osmosis device ii), it is preferred that the paper production plant further comprises or is connected with a municipal wastewater treatment device so that the retentate side of at least one and preferably of each of the microfiltration device and/or ultrafiltration device i) and/or the nanofiltration device and/or reverse osmosis device ii) is connected with an inlet of the municipal wastewater treatment device, wherein the municipal wastewater treatment device further comprises an outlet line for purified water, which splits into a water removal line and into a partial line leading to an inlet of the paper machine, wherein the partial line comprises or is connected with, respectively, i) a microfiltration device and/or an ultrafiltration device as well as ii) a nanofiltration device and/or a reverse osmosis device. The retentate side of at least one of the microfiltration device and/or ultrafiltration device i) and/or the nanofiltration device and/or reverse osmosis device ii) being connected with an inlet of the municipal wastewater treatment device may be the retentate side of any of the respective filtration devices of a process water circuit of the stock preparation device, of a process water circuit of the paper machine and/or of the wastewater purification and removal device. Good results are in particular obtained, when the paper production plant comprises an aforementioned wastewater purification and removal device comprising a microfiltration device and/or an ultrafiltration device as well as ii) a nanofiltration device and/or a reverse osmosis device, wherein the retentate side of at least the nanofiltration device and/or a reverse osmosis device ii) and preferably each of the retentate sides of the microfiltration device and/or ultrafiltration device i) as well as ii) of the nanofiltration device and/or reverse osmosis device is connected with a line leading into an inlet of the municipal wastewater treatment device. In turn, the outlet line of the municipal wastewater treatment device splits into a water removal line and into a partial line, wherein the partial line further comprises or is connected with, respectively, i) a microfiltration device and/or an ultrafiltration device as well as ii) a nanofiltration device and/or a reverse osmosis device and leads into the process water recycle line leading from the wastewater purification and removal device to the paper machine of the paper production plant. Preferably, the retentate side of the microfiltration device and/or ultrafiltration device i) of the partial line is connected via a line with the municipal wastewater treatment device and more preferably with a location being upstream of the aerobic stage of the municipal wastewater treatment device, whereas the retentate side of the nanofiltration device and/or reverse osmosis device ii) is preferably connected via a line with the water removal line.

In accordance with another aspect, the present invention relates to a method for the purification of process water, wherein process water is circulated in at least one process water circuit of an above-described plant for producing paper from a fiber containing raw material, wherein at least a portion of the process water is continuously led through the microfiltration device and/or ultrafiltration device i) as well as through the nanofiltration device and/or reverse osmosis device.

In accordance with one particular preferred embodiment of the present invention, the paper machine of the paper production plant comprises a process water circuit, which comprises a process water recirculation line, which comprises one, two, three, four or more of a thickening device, a solids removal device, an anaerobic reactor, a stripping device (such as a flash oxidation device) as well as a lime precipitation and removal device, and downstream thereof the i) microfiltration device and/or ultrafiltration device as well as the ii) nanofiltration device and/or reverse osmosis device, wherein process water is led through the process water recirculation line.

In accordance with a further particular preferred embodiment of the present invention, the plant comprises a stock preparation device comprising one to three stages, wherein each of the stages of the stock preparation devices comprises a process water circuit, which comprises a process water recirculation line comprising one, two, three, four or more of a thickening device, a solids removal device, an anaerobic reactor, a stripping device (such as a flash oxidation device) as well as a lime precipitation and removal device, wherein the process water recirculation line splits downstream of the one, two, three, four or more of the thickening device, the solids removal device, anaerobic reactor, stripping device, as well as lime precipitation and removal device into two partial process water lines, wherein a first of the two partial process water lines is connected with the microfiltration device and/or ultrafiltration device i) as well as with the nanofiltration device and/or reverse osmosis device ii), whereas a second of the partial process water lines bypasses the microfiltration device and/or ultrafiltration device i) as well as the nanofiltration device and/or reverse osmosis device ii), wherein both partial process water lines separately lead back into the stock preparation device and preferably the pulper or both partial process water lines recombine, before the combined line leads back into the stock preparation device and preferably the pulper or preferably the spraying water system, dilution water system or sealing water system of the stock preparation device, wherein 0.5 to 50% by volume and preferably 1 to 20% of the process water flowing through the process water recirculation line is led through the first partial process water line, whereas the remainder to 100% by volume of the process water flowing through the process water recirculation line is led through the second partial process water line.

In accordance with a further particular preferred embodiment of the present invention, at least one of the process water circuits being connected with the stock preparation device is connected via a line with a wastewater purification and removal device, wherein the wastewater purification and removal device comprises an aerobic reactor and optionally one, two or more clarifiers optionally followed by a dissolved air flotation device and/or a sandfiltration device, wherein each of the aerobic reactor, the one, two or more clarifiers and the optional dissolved air flotation device and/or sandfiltration device is connected with a wastewater removal line, wherein the wastewater purification and removal device further comprises downstream thereof the microfiltration device and/or ultrafiltration device i) as well as downstream thereof the nanofiltration device and/or reverse osmosis device ii), wherein the permeate side of the most downstream of the microfiltration device and/or ultrafiltration device i) is connected with the most upstream of the nanofiltration device and/or reverse osmosis device ii), wherein the permeate side of the most downstream of the nanofiltration device and/or reverse osmosis device ii) is connected with the process water recycle line, which leads directly or indirectly to the paper machine, preferably to the feed or upstream end of the screening device and more preferably the spraying water system or the fresh water circuit of the paper machine, wherein the permeate side of the microfiltration device and/or ultrafiltration device i) is also connected with a return line, which leads into a tank, wherein from the tank a connection line leads into the process water recycle line, wherein 0.5 to 50% by volume and preferably 1 to 20% of the process water of the permeate side of the microfiltration device and/or ultrafiltration device i) is led into the return line, whereas the remainder to 100% by volume of the process water is led to the next downstream filtration device and/or reverse osmosis device ii), and wherein all of the process water of the permeate side of the most downstream of the nanofiltration device and/or reverse osmosis device ii) is led through the process water recycle line back into the paper machine or is connected with the fresh water line leading to the paper machine.

In a further development of the idea of the present invention, it is suggested that into the process water flowing through at least one of the process water circuits and, if the paper production plant comprises two or more process water circuits, preferably into each of the process waters flowing through the process water circuits carbon dioxide is injected as pH adjustment agent, preferably upstream of the microfiltration device and/or ultrafiltration device ii) as well as of the nanofiltration device and/or reverse osmosis device ii). A particular advantage of using carbon dioxide as pH adjustment agent is that thereby no ions, such as sulfate and chloride ions, are introduced into the process water as it is the case when using pH adjustment agents as used in the prior art methods, such as mineral acids, such as sulfuric acid or hydrochloric acid. On account thereof, the use of carbon dioxide as pH adjustment agent assists in keeping the ion content in the process water low and as a consequence in preventing encrustation blockage as a consequence of the deposition of inorganic salts in a pipe or elsewhere in the paper production machine, such as in the membranes. In view of all this, it is further preferred that in the method, in addition to carbon dioxide, no further pH adjustment agent is injected into the process water and in particular no mineral acid, such as sulfuric acid and/or hydrochloric acid.

In accordance with a further particularly preferred embodiment of the present invention, ozone is injected into the process water flowing through at least one of the process water circuits and, if the paper production plant comprises two or more process water circuits, preferably into each of the process waters flowing through the process water circuits. Good results are in particular achieved, when the ozone is injected into the process water upstream of the microfiltration device and/or ultrafiltration device i) as well as upstream of the nanofiltration device and/or reverse osmosis device ii). As set out above, ozone is an effective disinfectant and a powerful oxidizing agent and does not only oxidize and thereby convert organic impurities, but also has the ability to inactivate microorganisms, such as bacteria, viruses and fungi. On account thereof, the addition of ozone during the process water treatment reduces the content of microorganisms in the process water and converts at least a portion of the organic impurities. As a consequence thereof, the addition of ozone assists in the reduction of the COD of the process water and reduces the microbial load of the process water thereby avoiding or at least significantly reducing the risk of the formation of undesired biofilm depositions for example in the pipes and paper machine of the paper production plant. Preferably, the ozone injection means is arranged in the process water circuit upstream of the microfiltration device and/or ultrafiltration device i) as well as of the nanofiltration device and/or reverse osmosis device ii). Good results are in particular achieved, when the ozone is added into the process water in a concentration of 0.1 to 10 and preferably of 0.6 to 6.0 g ozone per g COD.

In order to re-use at least a portion of the retentate obtained in the microfiltration device and/or ultrafiltration device i) and/or in the nanofiltration device and/or reverse osmosis device ii), it is further preferred that at least a portion of the retentate of at least one and preferably of each of the microfiltration device and/or ultrafiltration device i) and/or the nanofiltration device and/or reverse osmosis device ii) is led through an inlet into a municipal wastewater treatment device and is purified therein, before purified water is withdrawn from the municipal wastewater treatment device, from which at least a portion is led through a microfiltration device and/or an ultrafiltration device i) as well as through ii) a nanofiltration device and/or a reverse osmosis device, before the purified water is fed back into the paper machine. The retentate may be that of at least one of the microfiltration device and/or ultrafiltration device i) and/or in the nanofiltration device and/or reverse osmosis device ii) of a process water circuit of the stock preparation device, of a process water circuit of the paper machine and/or of the wastewater purification and removal device. Good results are in particular obtained, when the retentate of at least the nanofiltration device and/or a reverse osmosis device ii) and preferably each of the retentate sides of the microfiltration device and/or ultrafiltration device i) as well as ii) of the nanofiltration device and/or reverse osmosis device of the aforementioned wastewater purification and removal device is led through a line into an inlet of the municipal wastewater treatment device, wherein at least a portion of the purified water being withdrawn from the municipal wastewater treatment device is led through i) a microfiltration device and/or an ultrafiltration device as well as through ii) a nanofiltration device and/or a reverse osmosis device and is then led into the paper machine of the paper production plant.

Preferably, the retentate of the microfiltration device and/or ultrafiltration device i), through which the purified water having been withdrawn from the municipal wastewater treatment device was led, is led back into the inlet of the municipal wastewater treatment device or preferably to the aerobic stage of the municipal wastewater treatment device, whereas the retentate of the nanofiltration device and/or reverse osmosis device ii), through which the purified water having been withdrawn from the municipal wastewater treatment device was led, is led into the portion of the purified water having been removed from the municipal wastewater treatment device and being withdrawn from the plant.

In accordance with still another aspect, the present invention related to a method for producing paper in a paper production plant, wherein the method comprises the purification of process water in accordance with the aforementioned method for the purification of process water.

Subsequently, the present invention is described by means of illustrative, but not limiting figures, in which:
- Fig. 1a: shows a schematic view of a paper production plant in accordance with one embodiment of the present invention.
- Fig. 1b: shows a schematic view of the process water circuit of the preparation device of the plant shown in figure 1a.
- Fig. 1c: shows a schematic view of the process water circuit of the paper machine of the plant shown in figure 1a.
- Fig. 1d: shows a schematic view of the wastewater purification and removal device shown in figure 1a.
- Fig. 2: shows a schematic view of a paper production plant in accordance with another embodiment of the present invention.

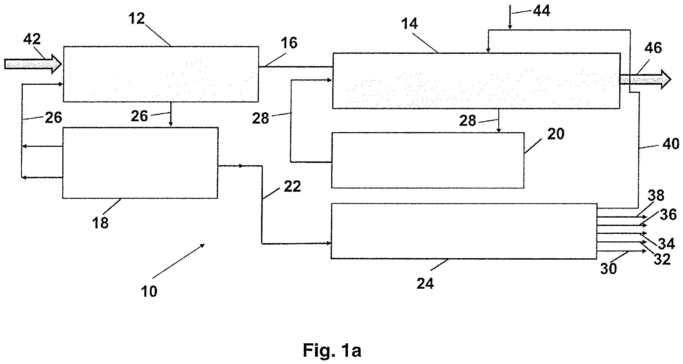

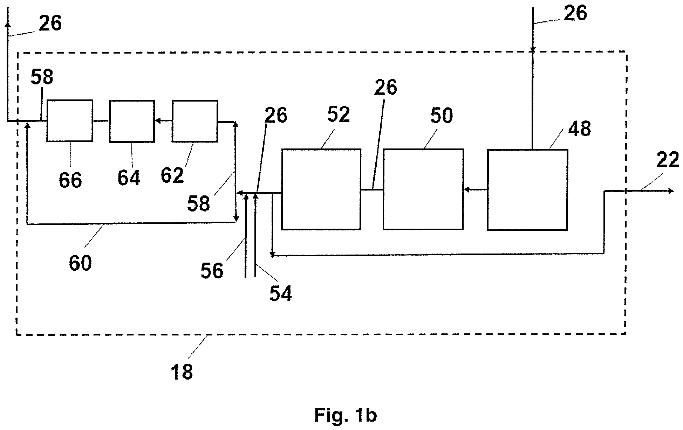

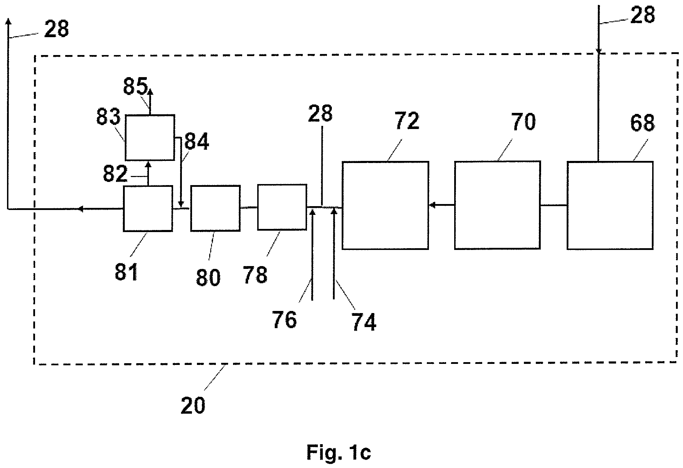

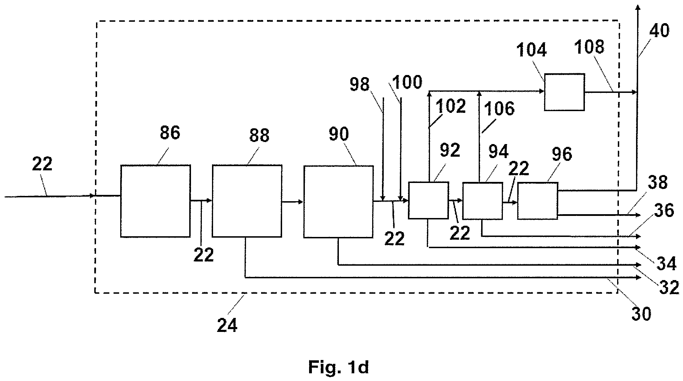

The paper production plant 10 shown in figures 1a to 1d comprises a stock preparation device 12 for preparing a fiber suspension and a paper machine 14 for producing paper from the fiber suspension, wherein the paper machine 14 is arranged downstream of and is connected with the stock preparation device 12 via a connection line 16. Each of the stock preparation device 12 and of the paper machine 14 comprises a process water circuit 18, 20, wherein the process water circuit 18 of the stock preparation device 12 is connected via a connection line 22 with a wastewater purification and removal device 24. More specifically, the process water circuit 18 of the stock preparation device 12 comprises a process water recirculation line 26, which leads from one or more locations of the stock preparation device 12 through the process water circuit 18 back to the same or one or more other locations of the stock preparation device 12. For instance, the process water recirculation line 26 is connected at one end with the reject treatment device (not shown), with the screening device (not shown), with the cleaning device (not shown) as well as with the dewatering device (not shown) of the stock preparation device 12, whereas the opposite end of the process water recirculation line 26 is connected with the pulper (not shown) or preferably the spraying water system, dilution water system or sealing water system (not shown) of the stock preparation device 12. Likewise, the process water circuit 20 of the paper machine 14 comprises a process water recirculation line 28, which leads from one or more locations of the paper machine 14 through the process water circuit 20 back to the same or one or more other locations of the paper machine 14. For instance, the process water recirculation line 28 is connected at one end with the reject treatment device (not shown) and/or with the fiber recovery device (not shown) of the paper machine 14, whereas the opposite end of the process water recirculation line 28 is connected with the upstream end of the screening device (not shown) of the paper machine 14. In turn, the wastewater purification and removal device 24 comprises five removal lines 30, 32, 34, 36, 38, namely sludge removal lines 30, 32 and retentate removal lines 34, 36, 38, and a process water recycle line 40, which leads directly back into the paper machine 14. In addition, the plant 10 comprises a raw material inlet line 42, a fresh water inlet line 44, which is connected with the process water recycle line 40, as well as a paper outlet 46.

The process water circuit 18 of the stock preparation device 12 comprises, seen from the upstream to the downstream end, an anaerobic reactor 48, a stripping device 50 and a lime precipitation and removal device 52, which is embodied as a dissolved air flotation device. Downstream of the lime precipitation and removal device 52, the connection line 22 splits off from the process water recirculation line 26. Downstream thereof, an ozone injection line 54 and an injection line 56 for carbon dioxide as pH adjustment agent lead into the process water recirculation line 26, before the process water recirculation line 26 splits into a first partial process water line 58 and into a second partial process water line 60. The first partial process water line 58 is connected, in this order, with a microfiltration device 62, with a fine filter 64 and with a reverse osmosis device 66, wherein the permeate side of the microfiltration device 62 is connected via the process water recirculation line 26 with the inlet of the fine filter 64, whereas the permeate side of the fine filter 64 is connected via the process water recirculation line 26 with the inlet of the reverse osmosis device 66. In turn, the permeate side of the reverse osmosis device 66 is connected via the process water recirculation line 26 with the opposite end of the first partial process water line 58, which then recombines with the second partial process water line 60 to the process water recirculation line 26, which leads back into the stock preparation device 12.

Similarly, the process water circuit 20 of the paper machine 14 comprises, seen from the upstream to the downstream end, an anaerobic reactor 68, a stripping device 70 and a lime precipitation and removal device 72, which is embodied as a dissolved air flotation device. Downstream of the lime precipitation and removal device 72, an injection line 74 ozone and an injection line 76 for carbon dioxide as pH adjustment agent lead into the process water recirculation line 28, before the process water recirculation line 28 is connected, in this order, with a microfiltration device 78, with a fine filter 80 and with a first stage 81 of a nanofiltration device, wherein the first stage 81 of the nanofiltration device is connected with a second stage 83 of the nanofiltration device. More specifically, the permeate side of the microfiltration device 78 is connected via the process water recirculation line 28 with the inlet of the fine filter 80, whereas the permeate side of the fine filter 80 is connected via the process water recirculation line 28 with the inlet of the first stage 81 of the nanofiltration device and the permeate side of the first stage 81 of the nanofiltration device is connected with the process water recirculation line 28. In turn, the retentate side of the first stage 81 of the nanofiltration device is connected via a retentate line 82 with the second stage 83 of the nanofiltration device, wherein the permeate side of the second stage 83 of the nanofiltration device is connected via the return line 84 with a location of the process water recirculation line 28 being upstream of the first stage 81 of the nanofiltration device, and wherein the retentate side of the second stage 83 of the nanofiltration device is connected with a retentate withdrawal line 85, which leads out of the plant 10.

The wastewater purification and removal device 24 of the plant 10 comprises, seen from the upstream to the downstream end connected each by the connection line 22, an aerobic reactor 86, a first clarifier stage 88, a second clarifier stage 90, a microfiltration device 92, a fine filter 94 and a reverse osmosis device 96. While the first clarifier 88 stage is connected with the removal line 30 and the second clarifier stage 90 is connected with the sludge removal line 32, the connection line 22 connecting the second clarifier stage 90 with the microfiltration device 92 is connected with an injection line 98 for ozone and with an injection line 100 for carbon dioxide as pH adjustment agent. The wastewater purification and removal device 24 may further comprise a dissolved air flotation device and a sandfiltration device (not shown) downstream of the second clarifier stage 90 or as replacement to the second clarifier stage 90. While the retentate side of the microfiltration device 92 is connected with the removal line 34, the retentate side of the fine filter 94 is connected with the removal line 36 and the retentate side of the reverse osmosis device 96 is connected with the removal line 38. The permeate side of the microfiltration device 92 is connected with two lines, namely via the connection line 22 with an inlet of the fine filter 94 and via a permeate return line 102 with a tank 104, whereas the permeate side of the fine filter 94 is connected with two lines, namely via the connection line 22 with an inlet of the reverse osmosis device 96 and via a permeate return line 106 with the tank 104. In turn, the tank 104 is further connected via a connection line 108 with the process water recycle line 40 and also the permeate side of the reverse osmosis device 96 is connected with the process water recycle line 40.

During the operation of the paper production plant 10, process water from the paper machine 14 is continuously led through the process water recirculation line 28 and is purified in the anaerobic reactor 68, the stripping device 70, the lime precipitation and removal device 72, the microfiltration device 78, the fine filter 80 and the two stages 81, 83 of the nanofiltration device. Likewise thereto, process water from the stock preparation device 12 is continuously led through the process water recirculation line 26 and is purified in the anaerobic reactor 48, the stripping device 50, the lime precipitation and removal device 52, the microfiltration device 62, the fine filter 64 and the reverse osmosis device 66. A portion of the process water having been purified in the anaerobic reactor 48, the stripping device 50 as well as the lime precipitation and removal device 52 is withdrawn from the process water recirculation line 26 and is led via the connection line 22 into the wastewater purification and removal device 24, in which it is purified in the aerobic reactor 86, the first clarifier stage 88, the second clarifier stage 90, the microfiltration device 92, the fine filter 94 and the reverse osmosis device 96. While the purified water is recycled as process water via the process water recycle line 40 back into the paper machine 14, the sludge streams being obtained in the first clarifier stage 88 and in the second clarifier stage 90 and being withdrawn from the paper production plant 10 via the sludge removal lines 30 ,32 are for instance treated in a sludge thickening stage (not shown), whereas the retentate streams being obtained in the microfiltration device 92, in the fine filter 94 and in the reverse osmosis device 96 are withdrawn from the paper production plant 10 via the retentate removal lines 34, 36, 38.

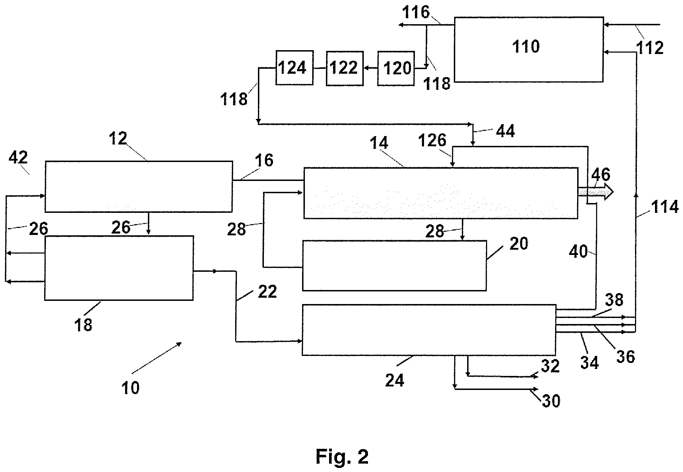

The paper production plant 10 shown in figure 2 is similar to that shown in figures 1a to 1d and differs therefrom by further comprising a municipal wastewater treatment device 110. The inlet of the municipal wastewater treatment device 110 is connected with a wastewater inlet line 112, which is for instance connected with the municipal wastewater net, and is further connected with a collection line 114, to which the retentate removal lines 34, 36, 38 combine. Furthermore, the municipal wastewater treatment device 110 is connected with a withdrawal line 116 for purified wastewater, from which a return line 118 splits off. The return line 118 is connected with a microfiltration device 120, with a fine filter 122 and with a reverse osmosis device 124 and combines with the process water recycle line 40 to the water inlet line 126. The operation of the paper production plant 10 corresponds to that of the plant shown in figures 1a to 1d, except that the retentate streams being obtained in the microfiltration device 92, in the fine filter 94 and in the reverse osmosis device 96 of the wastewater purification and removal device 24 being withdrawn from the wastewater purification and removal device 24 via the retentate removal lines 34, 36, 38 are combined and led through the collection line 114 into the municipal wastewater treatment device 110, in which these streams are purified together with municipal wastewater being fed into the municipal wastewater treatment device 110 through the wastewater inlet line 112. Purified wastewater is withdrawn from the municipal wastewater treatment device 110 via the withdrawal line 116 for purified wastewater, from which a portion is withdrawn from the paper production plant 10, whereas another portion thereof is led through the return line 118 and is purified in the microfiltration device 120, in the fine filter 122 and in the reverse osmosis device 124, before the purified permeate of the reverse osmosis device 124 is led via the return line 118 and combined with the process water being recycled via the process water recycle line 40, before the combined stream is fed via the water inlet line 126 into the paper machine 14 of the paper production plant 10.

### Reference numerals

- 10: Paper production plant
- 12: Stock preparation device
- 14: Paper machine
- 16: Connection line
- 18: Process water circuit of the stock preparation device
- 20: Process water circuit of the paper machine
- 22: Connection line
- 24: Wastewater purification and removal device
- 26: Process water recirculation line of the stock preparation device
- 28: Process water recirculation line of the paper machine
- 30: Sludge removal line
- 32: Sludge removal line
- 34: Retentate removal line
- 36: Retentate removal line
- 38: Retentate removal line
- 40: Process water recycle line
- 42: Raw material inlet line
- 44: Fresh water inlet line
- 46: Paper outlet
- 48: Anaerobic reactor of the process water circuit of the stock preparation device
- 50: Stripping device of the process water circuit of the stock preparation device
- 52: Lime precipitation and removal device of the process water circuit of the stock preparation device
- 54: Injection line for ozone of the process water circuit of the stock preparation device
- 56: Injection line for carbon dioxide of the process water circuit of the stock preparation device
- 58: First partial process water line of the process water circuit of the stock preparation device
- 60: Second partial process water line of the process water circuit of the stock preparation device
- 62: Microfiltration device of the process water circuit of the stock preparation device
- 64: Fine filter of the process water circuit of the stock preparation device
- 66: Reverse osmosis device of the process water circuit of the stock preparation device
- 68: Anaerobic reactor of the process water circuit of the paper machine
- 70: Stripping device of the process water circuit of the paper machine
- 72: Lime precipitation and removal device of the process water circuit of the paper machine
- 74: Injection line for ozone of the process water circuit of the paper machine
- 76: Injection line for carbon dioxide of the process water circuit of the paper machine
- 78: Microfiltration device of the process water circuit of the paper machine
- 80: Fine filter of the process water circuit of the paper machine
- 81: First stage of a nanofiltration device of the process water circuit of the paper machine
- 82: Retentate line
- 83: Second stage of a nanofiltration device of the process water circuit of the paper machine
- 84: Return line
- 85: Retentate withdrawal line
- 86: Aerobic reactor of the wastewater purification and removal device
- 88: First clarifier stage of the wastewater purification and removal device
- 90: Second clarifier stage of the wastewater purification and removal device
- 92: Microfiltration device of the wastewater purification and removal device
- 94: Fine filter of the wastewater purification and removal device
- 96: Reverse osmosis device of the wastewater purification and removal device
- 98: Injection line for ozone of the wastewater purification and removal device
- 100: Injection line for carbon dioxide of the wastewater purification and removal device
- 102: Permeate return line
- 104: Tank
- 106: Permeate return line
- 108: Connection line
- 110: Municipal wastewater treatment device
- 112: Wastewater inlet line
- 114: Collection line
- 116: Withdrawal line for purified wastewater
- 118: Return line
- 120: Microfiltration device
- 122: Fine filter
- 124: Reverse osmosis device
- 126: Water inlet line

## Claims

1. A plant for producing paper from a fiber containing raw material, wherein the plant comprises a stock preparation device for preparing a fiber suspension and a paper machine for producing paper from the fiber suspension being connected with the stock preparation device, wherein at least one of the stock preparation device and the paper machine comprises a process water circuit, which may be connected via a line with a wastewater purification and removal device from which a process water recycle line leads directly or indirectly back into one of the stock preparation device and the paper machine, wherein at least one process water circuit and/or wastewater purification and removal device comprises i) a microfiltration device and/or an ultrafiltration device as well as ii) a nanofiltration device and/or a reverse osmosis device.

2. The plant in accordance with claim 1, wherein the microfiltration device and/or ultrafiltration device i) is arranged upstream of the nanofiltration device and/or reverse osmosis device ii), wherein each of the microfiltration device, the ultrafiltration device, the nanofiltration device and the reverse osmosis device comprises one, two or more stages, wherein preferably at least one and more preferably two, more or all of the microfiltration device, the ultrafiltration device, the nanofiltration device and the reverse osmosis device comprises two or more filtration stages, wherein the retentate side of an upstream stage of the filtration device is connected with the feed side of the next downstream stage of the same filtration device, wherein the retentate side of the most downstream of the stages of the filtration device is connected with a retentate withdrawal line, which may lead to a retentate treatment device, whereas each permeate side of each of the downstream stages of the filtration device is connected with the feed side of the first stage of this filtration device or to the permeate side of a more upstream stage of this filtration device.

3. The plant in accordance with claim 1 or 2, wherein a) a fine filter device is arranged upstream of the most upstream of the microfiltration device and/or ultrafiltration device i) and the nanofiltration device and/or reverse osmosis device ii) and/or b) a fine filter device and/or microfilter device having a pore size of 1 to 10 µm is arranged between the microfiltration device and/or ultrafiltration device i) and the nanofiltration device and/or reverse osmosis device ii).

4. The plant in accordance with any of the preceding claims, wherein the paper machine comprises a process water circuit, which comprises the i) microfiltration device and/or ultrafiltration device as well as the ii) nanofiltration device and/or reverse osmosis device, wherein the paper machine preferably comprises, seen from the upstream to the downstream end, a screening section, a forming section, a press section, a drying section and a calender section, wherein the screening section is connected with a reject treatment device and the forming section is connected with a fiber recovery device, wherein the process water circuit, which comprises the i) microfiltration device and/or ultrafiltration device as well as the ii) nanofiltration device and/or reverse osmosis device, is connected at one end with the reject treatment device and/or with the fiber recovery device and with its opposite end with the feed or upstream end of the screening device or preferably the spraying water system of the paper machine or even more preferably with the fresh water system of the paper machine, wherein preferably the process water circuit further comprises at least one of a thickening device, a solids removal device, an anaerobic reactor, a stripping device for separating and removing gas from the process water and a lime precipitation and removal device, wherein the stripping device may be a flash oxidation device.

5. The plant in accordance with claim 4, wherein the process water circuit further comprises i) a carbon dioxide injection means for injecting carbon dioxide gas into the process water flowing through the process water circuit and/or ii) an ozone injection means for injection ozone gas into the process water flowing through the process water circuit and/or iii) further comprises a dissolved ozone flotation device and a gas-liquid dissolving tank, wherein the dissolved ozone flotation device comprises a flotation tank with a process water inlet line, an inlet line for ozone, a process water outlet line, a solid outlet line, wherein the gas-liquid dissolving tank comprises an inlet line for compressed ozone, an inlet line for water and an outlet line for a pressurized ozone gas containing water mixture, wherein the outlet line for a pressurized ozone gas containing water mixture is connected with the inlet line for ozone of the flotation tank and is comprised with a pressure relief valve allowing to depressurize the pressurized ozone gas containing water mixture.

6. The plant in accordance with any of the preceding claims, wherein the stock preparation device comprises a process water circuit, which comprises the i) microfiltration device and/or ultrafiltration device as well as the ii) nanofiltration device and/or reverse osmosis device, wherein preferably:
- the stock preparation device comprises one stage, which comprises, seen from the upstream to the downstream end, a pulper, a screening device, a cleaning device and a dewatering device, wherein the pulper, the screening device and the cleaning device are connected with a reject treatment device, wherein the process water circuit, which comprises the i) microfiltration device and/or ultrafiltration device as well as the ii) nanofiltration device and/or reverse osmosis device, is connected at one end with the reject treatment device, with the screening device, the cleaning device as well as with the dewatering device and with its opposite end with the pulper or preferably the spraying water system, dilution water system or sealing water system of the stock preparation device, or
- the stock preparation device comprises two or more, preferably two to three and more preferably two stages, wherein each stage comprises a separate process water circuit, wherein the most upstream stage of the stock preparation device comprises, seen from the upstream to the downstream end, a pulper, a screening device, a cleaning device and a dewatering device, wherein the pulper, the screening device and the cleaning device are connected with a reject treatment device, wherein the process water circuit, which comprises the i) microfiltration device and/or ultrafiltration device as well as the ii) nanofiltration device and/or reverse osmosis device, is connected at one end with the reject treatment device, with the screening device, the cleaning device as well as with the dewatering device and with its opposite end with the pulper or preferably the spraying water system, dilution water system or sealing water system of the stage of the stock preparation device, wherein each other stage of the stock preparation device comprises, seen from the upstream to the downstream end, a screening device, a cleaning device, an oxidation/reduction device and a dewatering device, wherein the screening device, the cleaning device and the oxidation/reduction device are connected with a reject treatment device, wherein the process water circuit, which comprises the i) microfiltration device and/or ultrafiltration device as well as the ii) nanofiltration device and/or reverse osmosis device, is connected at one end with the reject treatment device, with the screening device, the cleaning device as well as with the dewatering device and with its opposite end with the screening device.

7. The plant in accordance with claim 6, wherein each of the process water circuits further comprises at least one of a thickening device, a solids removal device, an anaerobic reactor, a stripping device for separating and removing gas from the process water and a lime precipitation and removal device, wherein the i) microfiltration device and/or ultrafiltration device as well as the ii) nanofiltration device and/or reverse osmosis device are arranged downstream of all of the at least one of the thickening device, the solids removal device, the anaerobic reactor, the stripping device and the lime precipitation and removal device, wherein the stripping device may be a flash oxidation device.

8. The plant in accordance with any of claims 6 or 7, wherein the process water circuit further comprises i) a carbon dioxide injection means for injecting carbon dioxide gas into the process water flowing through the process water circuit and/or ii) an ozone injection means for injecting ozone gas into the process water flowing through the process water circuit, and/or iii) comprises a dissolved ozone flotation device and a gas-liquid dissolving tank, wherein the dissolved ozone flotation device comprises a flotation tank with a process water inlet line, an inlet line for ozone, a process water outlet line, a solid outlet line, and wherein the gas-liquid dissolving tank comprises an inlet line for compressed ozone, an inlet line for water and an outlet line for a pressurized ozone gas containing water mixture, wherein the outlet line for a pressurized ozone gas containing water mixture is connected with the inlet line for ozone of the flotation tank and is comprised with a pressure relief valve allowing to depressurize the pressurized ozone gas containing water mixture.

9. The plant in accordance with any of claims 6 to 8, wherein at least one of the process water circuits being connected with the stock preparation device is connected via a line with a wastewater purification and removal device, wherein the wastewater purification and removal device comprises a i) microfiltration device and/or ultrafiltration device as well as a ii) nanofiltration device and/or reverse osmosis device, and wherein from the wastewater purification and removal device the process water recycle line leads directly or indirectly back into one of the stock preparation device and the paper machine and preferably into the paper machine, wherein the microfiltration device and/or ultrafiltration device i) and the nanofiltration device and/or reverse osmosis device ii) are connected with each other so that the permeate side of the most downstream of the nanofiltration device and/or reverse osmosis device ii) is connected with the most upstream of the microfiltration device and/or ultrafiltration device i) and preferably so that the permeate side of the most downstream of the microfiltration device and/or ultrafiltration device i) is connected with the most upstream of the nanofiltration device and/or reverse osmosis device ii), wherein preferably the wastewater purification and removal device comprises upstream of the microfiltration device and/or ultrafiltration device i) as well as of the nanofiltration device and/or reverse osmosis device ii) an aerobic reactor and one, two or more clarifiers optionally followed by a dissolved air flotation device and/or a sandfiltration device, wherein each of the aerobic reactor, the one, two or more clarifiers and the optional dissolved air flotation device and/or sandfiltration device is connected with a wastewater removal line, wherein preferably the microfiltration device and/or ultrafiltration device i) is arranged upstream of the nanofiltration device and/or reverse osmosis device ii), wherein the permeate side of the most downstream of the microfiltration device and/or ultrafiltration device i) is connected with the most upstream of the nanofiltration device and/or reverse osmosis device ii), wherein the permeate side of the most downstream of the nanofiltration device and/or reverse osmosis device ii) is connected with the process water recycle line, which leads directly or indirectly to the paper machine, preferably to the feed or upstream end of the screening device of the paper machine, more preferably the spraying water system of the paper machine and most preferably is connected with the fresh water line leading to the paper machine, wherein preferably the permeate side of the microfiltration device and/or ultrafiltration device i) is also connected with a return line, which is directly or indirectly connected with the process water recycle line.

10. The plant in accordance with claim 9, which further comprises or is connected with a municipal wastewater treatment device so that the retentate side of at least one and preferably of each of the microfiltration device and/or ultrafiltration device i) and/or the nanofiltration device and/or reverse osmosis device ii) is connected with an inlet of the municipal wastewater treatment device, wherein the municipal wastewater treatment device further comprises an outlet line for purified water, from which at least a partial line leads to an inlet of the paper machine, wherein the outlet line comprises or is connected with, respectively, i) a microfiltration device and/or an ultrafiltration device as well as ii) a nanofiltration device and/or a reverse osmosis device.

11. A method for the purification of process water, wherein process water is circulated in at least one process water circuit of a plant for producing paper from a fiber containing raw material in accordance with claim 1, wherein at least a portion of the process water is continuously led through the microfiltration device and/or an ultrafiltration device i) as well as through the nanofiltration device and/or reverse osmosis device ii).

12. The method in accordance with claim 11, wherein the paper machine of the paper production plant comprises a process water circuit, which comprises a process water recirculation line, which comprises one, two, three, four or more of a thickening device, a solids removal device, an anaerobic reactor, a stripping device as well as a lime precipitation and removal device, and downstream thereof the i) microfiltration device and/or ultrafiltration device as well as the ii) nanofiltration device and/or reverse osmosis device, wherein process water is led through the process water recirculation line.

13. The method in accordance with claim 11 or 12, wherein the plant comprises a stock preparation device comprising one to three stages, wherein each of the stages of the stock preparation devices comprises a process water circuit, which comprises a process water recirculation line comprising one, two, three, four or more of a thickening device, a solids removal device, an anaerobic reactor, a stripping device as well as a lime precipitation and removal device, wherein the process water recirculation line splits downstream of the one, two, three, four or more of the thickening device, the solids removal device, anaerobic reactor, stripping device as well as lime precipitation and removal device and upstream of the nanofiltration device and/or reverse osmosis device ii), but downstream of the microfiltration device and/or ultrafiltration device i) into two partial process water lines, wherein a first of the two partial process water lines is connected with the nanofiltration device and/or reverse osmosis device ii), whereas a second of the partial process water lines bypasses the nanofiltration device and/or reverse osmosis device ii), wherein both partial process water lines separately lead back into the stock preparation device and preferably the pulper or more preferably spraying water system, dilution water system or sealing water system of the stock preparation device or both partial process water lines recombine, before the combined line leads back into the stock preparation device and preferably the pulper or more preferably spraying water system, dilution water system or sealing water system of the stock preparation device, wherein 0.5 to 50% by volume and preferably 1 to 20% of the process water flowing through the process water recirculation line is led through the first partial process water line, whereas the remainder to 100% by volume of the process water flowing through the process water recirculation line is led through the second partial process water line.

14. The method in accordance with any of claims 11 to 13, wherein at least one of the process water circuits being connected with the stock preparation device is connected via a line with a wastewater purification and removal device, wherein the wastewater purification and removal device comprises an aerobic reactor and optionally one, two or more clarifiers optionally followed by a dissolved air flotation device and/or a sandfiltration device, wherein each of the aerobic reactor, the one, two or more clarifiers and the optional dissolved air flotation device and/or sandfiltration device is connected with a wastewater removal line, wherein the wastewater purification and removal device further comprises downstream thereof the microfiltration device and/or ultrafiltration device i) as well as downstream thereof the nanofiltration device and/or reverse osmosis device ii), wherein the permeate side of the most downstream of the microfiltration device and/or ultrafiltration device i) is connected with the most upstream of the nanofiltration device and/or reverse osmosis device ii), wherein the permeate side of the most downstream of the nanofiltration device and/or reverse osmosis device ii) is connected with the process water recycle line, which leads directly or indirectly to the paper machine, preferably to the feed or upstream end of the screening device and more preferably the spraying water system or is even more preferably connected with the fresh water circuit of the paper machine, wherein the permeate side of the microfiltration device and/or ultrafiltration device i) is also connected with a return line, which leads into a tank, wherein from the tank a connection line leads into the process water recycle line, wherein 0.5 to 50% by volume and preferably 1 to 20% of the process water of the permeate side of the microfiltration device and/or ultrafiltration device i) is led into the return line, whereas the remainder to 100% by volume of the process water is led to the next downstream filtration device and/or reverse osmosis device ii), and wherein all of the process water of the permeate side of the most downstream of the nanofiltration device and/or reverse osmosis device ii) is led through the process water recycle line back into the paper machine.

15. The method in accordance with any of claims 11 to 14, wherein a) into the process water flowing through at least one of the process water circuits and, if the paper production plant comprises two or more process water circuits, preferably into each of the process waters flowing through the process water circuits carbon dioxide is injected as pH adjustment agent, preferably upstream of the microfiltration device and/or ultrafiltration device ii) as well as of the nanofiltration device and/or reverse osmosis device ii), wherein preferably no further pH adjustment agent in addition to carbon dioxide is injected into the process water, and/or b) into the process water flowing through at least one of the process water circuits and, if the paper production plant comprises two or more process water circuits, preferably into each of the process waters flowing through the process water circuits ozone is injected, preferably upstream of the microfiltration device and/or ultrafiltration device i) as well as of the nanofiltration device and/or reverse osmosis device ii) and/or c) at least one and more preferably two, more or all of the microfiltration device, the ultrafiltration device, the nanofiltration device and the reverse osmosis device, through which the process water is led, comprises two or more filtration stages, wherein the retentate side of an upstream stage of the filtration device is connected with the feed side of the next downstream stage of the same filtration device, wherein the retentate side of the most downstream of the stages of the filtration device is connected with a retentate withdrawal line, which may lead to a retentate treatment device, whereas each permeate side of each of the downstream stages of the filtration device is connected with the feed side of the first stage of this filtration device or to the permeate side of a more upstream stage of this filtration device.
